# EUROPÄISCHE PATENTSCHRIFT

(11) **EP 0 293 619 B1**
(45) Veröffentlichungstag und Bekanntmachung des Hinweises auf die Patenterteilung: **08.09.1993**
(21) Anmeldenummer: 88107149.2
(22) Anmeldetag: 04.05.1988
(51) Int. Cl.: B60J 7/19

(54) **Vorrichtung zur Verriegelung des Dachlukendeckels eines Fahrerhauses eines Kraftfahrzeuges**
Securing means for vehicle roof panels
Fermeture pour toit ouvrant de véhicule automobile

(30) Priorität: 04.06.1987 DE 3718737; 24.03.1988 DE 3809914
(43) Veröffentlichungstag der Anmeldung: 07.12.1988
(73) Patentinhaber: MAN Nutzfahrzeuge Aktiengesellschaft, 80976 München (DE)
(72) Erfinder: Schmidt, Werner, D-8000 München 50 (DE); John, Herbert, D-8000 München 50 (DE); Watzek, Gerhard, D-8000 München 45 (DE)

(56) Entgegenhaltungen:
- DE-A- 3 502 485

## Beschreibung

Die Erfindung betrifft eine Vorrichtung zur Verriegelung des Dachlukendeckels eines Fahrerhauses eines Kraftfahrzeuges, mit einem in einer in Fahrzeuglängsrichtung verlaufenden Vertiefung und an der Innenseite des Deckels versenkbarem Griff, der am Dachlukendeckel schwenkbar befestigt ist, wobei der Griff als Hebel ausgebildet ist, dessen am Dachlukendeckel angelenktes Ende einen Exzenterhaken aufweist, der beim Versenken des Hebels in die Deckelvertiefung einen am Lukenrahmen befestigten Verriegelungsnocken umgreift und bei annähernd vertikaler Stellung den Verriegelungsstift freigibt.

Es ist eine Vorrichtung dieser Art nach der DE-A-35 02 485 bekannt. Diese Vorrichtung gestattet ein problemloses Öffnen und Schließen des Dachlukendeckels vom Fahrersitz aus, ohne daß die Fahrt zur Handhabung des Schließ- und Öffnungsmechanismus unterbrochen werden muß. Des weiteren ist der Verriegelungsmechanismus in der Schließstellung von außen unzugänglich und damit einbruchsicher. Es hat sich jedoch gezeigt, daß die Belüftung des Fahrzeuges über die geöffnete Dachluke nur bei schönem Wetter möglich ist, während bei Regen oder Schneefall Wasser in das Fahrerhaus eindringen kann, was somit unter solchen Wetterbedingungen eine Offenstellung des Dachlukendeckels ausschließt. Andererseits ist aber auch unter schlechten Wetterbedingungen die Belüftung des Fahrerhauses wünschenswert.

Der Erfindung liegt also die Aufgabe zugrunde, eine Belüftung des Fahrerhauses von Kraftfahrzeugen auch bei schlechten Witterungsbedingungen ohne nachteilige Wirkungen für den Fahrer zu ermöglichen.

Dies wird erfindungsgemäß dadurch erreicht, daß der Exzenterhaken des Dachlukendeckels zwei Verriegelungsrasten, nämlich eine Schließraste und eine Regenraste aufweist, wobei die Schließraste die Dachluke bei Einrasten über dem Verriegelungsnocken geschlossen und die Regenraste die Dachluke bei Einrasten über den Verriegelungsnocken leicht geöffnet hält. Solcherart ergibt sich die Möglichkeit, völlig unabhängig von den jeweils herrschenden Witterungsbedingungen für eine ausreichende Belüftung des Fahrerhausinneren zu sorgen. Es ist für die längere Strecken zurücklegenden und daher oft übermüdeten Fahrer von besonderer Wichtigkeit, stets eine genügende Sauerstoffzufuhr zu erhalten, so daß ihre Sinne auch bei längerer Fahrtbelastung geschärft bleiben.

Gemäß einer weiteren Ausbildung der Erfindung weist die Regenraste eine maulförmige Öffnung auf. Damit wird das Einfangen des Verriegelungsnockens in die Raste wesentlich erleichtert. Diesen Vorteil noch verstärkend, ist die obere Schließraste mit der unteren Regenraste durch eine nach unten schräg abfallende Gleitfläche verbunden.

Nach einem wesentlichen Merkmal der Erfindung ist der Exzenterhaken an einem Bolzen befestigt, der in einem Gehäuse gelagert und gegen Federdruck axial verschiebbar ist. Auf diese Weise ist, auch unter Ausnutzung der axialen Verschiebbarkeit, ein Eingleiten des Verriegelungsnockens von unten bei Auflaufen desselben auf die Einlauffase am unteren Schenkel der Regenraste möglich.

Die Erfindung kann auch dahingehend gestaltet sein, daß der untere, die Regenraste beinhaltende Teil des Exzenterhakens aus einem Elastomer besteht und die maulförmige Öffnung und die obere Einführungsschräge der Regenraste metallarmiert sind. Auch wenn der untere Bereich der Regenraste aus dem Dachhimmel herausragen sollte, werden durch seine Ausbildung aus Weichmaterial Kopfverletzungen vermieden. Die Metallarmierung der Maulöffnung verhindert eine vorzeitige Abnutzung.

Weitere Merkmale und Vorteile der Erfindung sind den Ansprüchen, der Beschreibung und den Zeichnungen zu entnehmen.

Die Erfindung ist in einem Ausführungsbeispiel dargestellt.

Es zeigen:
- Figur 1: einen Dachlukendeckel, geschlossen und voll geöffnet, im Seitenschnitt,
- Figur 2: einen Dachlukendeckel leicht geöffnet, im Seitenschnitt,
- Figur 3: einen Dachlukendeckel im Schnitt, in Vorderansicht.

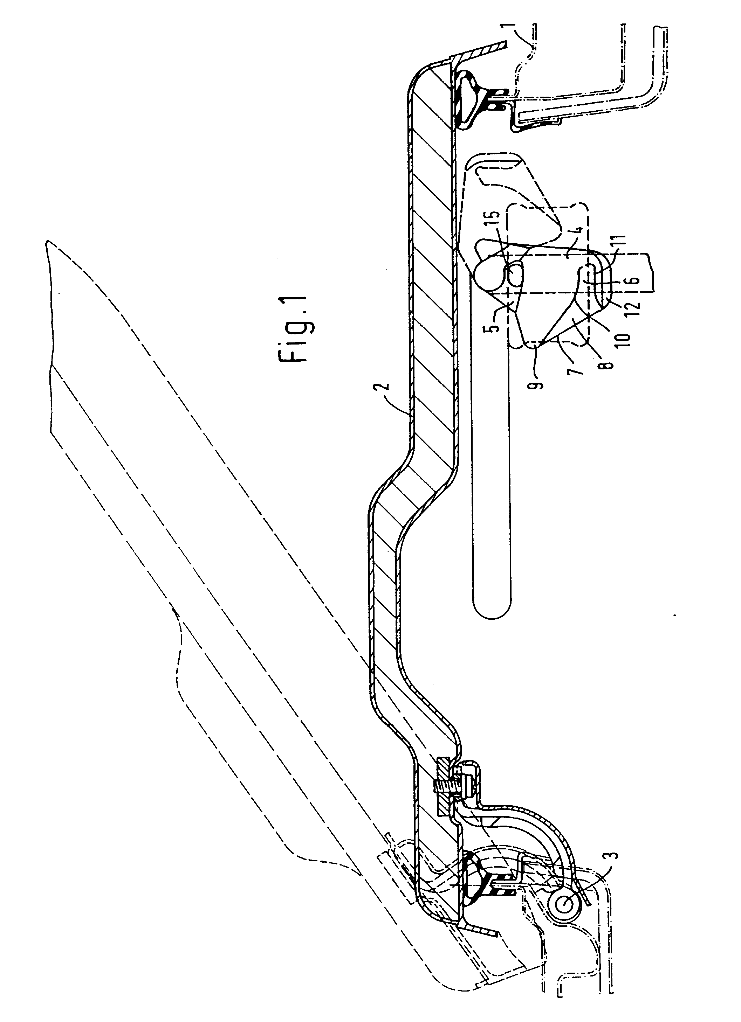

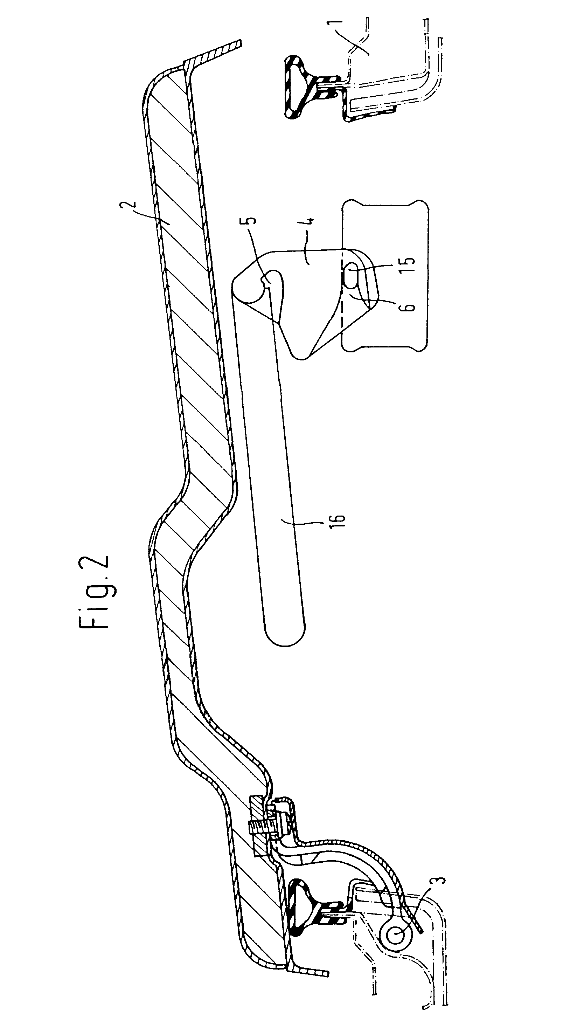

In den Figuren 1 und 2 ist ein um den Drehpunkt (3) schwenkbarer Dachlukendeckel (2) eines Fahrerhausdaches (1) dargestellt. Figur 1 zeigt die Schließstellung des Dachlukendeckels (2) sowie strichliniert die Offenstellung. Fest mit dem Dachlukendeckel verbunden ist ein Exzenterhaken (4), der eine Schließraste (5) und eine Regenraste (6) aufweist, wobei eine äußere Aufnahmekante (9) der Schließraste über eine Gleitfläche (7) mit einer oberen Einführungskante (10) einer maulförmigen Öffnung (8) der Regenraste verbunden ist. Der untere Schenkel (11) der Regenraste (6) weist eine Einlauffase (12) auf, an der ein ortsfester Verriegelungsnocken 15) aufgleiten und in die Regenraste (6) einrasten kann.

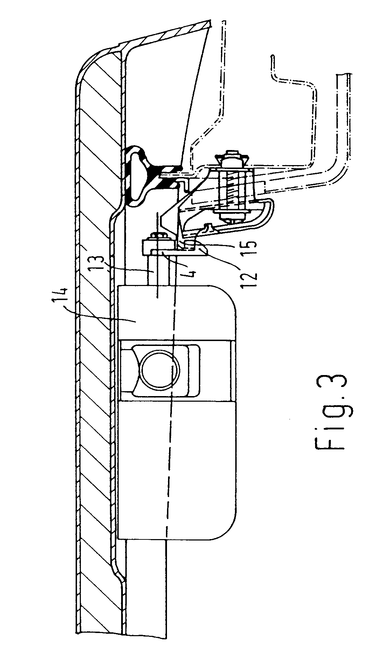

Nach Figur 3 ist der Exzenterhaken (4) fest mit einem Bolzen (13) verbunden, der im Gehäuse (14) drehbar gelagert und gegen Federdruck nach dem Prinzip der Schließfalle axial verschiebbar ist. Somit kann der Verriegelungsnocken (15) an der Einlauffase (12) der Regenraste (6) aufgleiten. Der Exzenterhaken (4) ist mit einem Exzenterhebel (16) verbunden und über diesen betätigbar, wobei drei Festpositionen erzielbar sind:
1. Die Schließraste (5) des Exzenterhakens (4) befindet sich mit dem Verriegelungsnocken (15) in Eingriff - der Dachlukendeckel (2) ist geschlossen.
2. Durch den vom Fahrersitz nach unten schwenkbaren Exzenterhebel (16) wird die Schließraste (5) des Exzenterhakens (4) von dem Verriegelungsnocken (15) außer Eingriff gebracht - der Dachlukendeckel (2) kann bis in seiner Offenstellung hochgeschoben werden.
3. Durch Herabziehen des Dachlukendeckels (2) aus der Offenstellung, aber auch durch seitliches Eindrücken über die Einlauffase (12) des unteren Schenkels (11) kann die Regenraste (6) des Exzenterhakens (4) mit dem Verriegelungsnocken (15) - siehe Figur 2 - in Eingriff gebracht werden - der Dachlukendeckel befindet sich in leicht geöffneter Stellung.

### Bezugszeichenliste

- 1: Fahrerhausdach
- 2: Dachlukendeckel
- 3: Drehpunkt von 2
- 4: Exzenterhaken
- 5: Schließraste an 4
- 6: Regenraste an 4
- 7: Gleitfläche an 4
- 8: maulförmige Öffnung an 6
- 9: äußere Aufnahmekante von 5
- 10: obere Einführungskante von 6
- 11: unterer Schenkel von 6
- 12: Einlauffase an 6 (4)
- 13: Bolzen
- 14: Gehäuse
- 15: Verriegelungsnocken
- 16: Exzenterhebel

## Patentansprüche

1. Vorrichtung zur Verriegelung des Dachlukendeckels (2) eines Fahrerhauses eines Kraftfahrzeuges, mit einem in einer in Fahrzeuglängsrichtung verlaufenden Vertiefung und an der Innenseite des Deckels (2) versenkbarem Griff, der am Dachlukendeckel (2) schwenkbar befestigt ist, wobei der Griff als Hebel ausgebildet ist, dessen am Dachlukendeckel angelenktes Ende einen Exzenterhaken (4) aufweist, der beim Versenken des Hebels in die Deckelvertiefung einen am Lukenrahmen befestigten Verriegelungsnocken (15) umgreift und bei annähernd vertikaler Stellung den Verriegelungsnocken (15) freigibt, dadurch gekennzeichnet, daß der Exzenterhaken (4) zwei Verriegelungsrasten, nämlich eine Schließraste (5) und eine Regenraste (6) aufweist, wobei die Schließraste (5) den Dachlukendeckel (2) bei Einrasten über den Verriegelungsnocken (15) geschlossen und die Regenraste (6) den Dachlukendeckel (2) bei Einrasten über den Verriegelungsnocken (15) leicht geöffnet hält.

2. Vorrichtung nach Anspruch 1, dadurch gekennzeichnet, daß die Regenraste (6) eine maulförmige Öffnung (8) aufweist.

3. Vorrichtung nach Anspruch 1 oder 2, dadurch gekennzeichnet, daß der Exzenterhaken (4) von der äußeren Aufnahmekante (9) der Schließraste (5) eine schräg nach unten abfallende Gleitfläche (7) zur oberen Einführungskante (10) der Regenraste (6) aufweist und am unteren Schenkel (11) der Regenraste (6) eine Einlauffase (12) vorgesehen ist.

4. Vorrichtung nach einem der Ansprüche 1 bis 3, dadurch gekennzeichnet, daß der Exzenterhaken (4) an einem Bolzen (13) befestigt ist, der in einem Gehäuse (14) gelagert und gegen Federdruck axial verschiebbar ist.

5. Vorrichtung nach einem oder mehreren der Ansprüche 1 bis 4, dadurch gekennzeichnet, daß der untere, die Regenraste (6) beinhaltende Teil des Exzenterhakens (4) aus einem Elastomer besteht und der Schenkel (11) verrundet ist.

6. Vorrichtung nach Anspruch 5, dadurch gekennzeichnet, daß die maulförmige Öffnung (8) und die obere Einführungsschräge (10) metallarmiert sind.

## Claims

1. Device for locking the roof hatch cover (2) of a motor vehicle cab equipped with a handle located in a recess running parallel to the vehicle's longitudinal axis, which handle can be inserted into the inside of the cover (2), is swivel-mounted to the roof hatch cover (2) and is designed as a lever, one end of which is linked to the roof hatch cover and provided with an eccentric hook (4) which clasps a locking cam (15) attached to the roof hatch frame when the lever is inserted into the cover recess and releases the locking cam (15) when in approximately vertical position, characterised in that the eccentric hook (4) has two locking detents, ie one closing detent (5) and one rain detent (6), the closing detent (5) keeping the roof hatch cover (2) closed when the hook (4) locks into place on the locking cam (15) and the rain detent (6) keeping the roof hatch cover (2) slightly open when the hook (4) locks into place on the locking cam (15).

2. Device as under Claim 1, characterised in that the rain detent (6) is provided with a jaw-like opening (8).

3. Device as under Claim 1 or 2, characterised in that the eccentric hook (4) is provided with a sliding surface (7) sloping downwards at an angle from the outer clamping edge (9) of the closing detent (5) to the upper guide edge (10) of the rain detent (6) whose lower side (11) has a lead chamfer (12).

4. Device as under one of the Claims 1 to 3, characterised in that the eccentric hook (4) is fastened to a pin (13) mounted in a housing (14) and axially moveable by spring pressure.

5. Device as under one or several of the Claims 1 to 4, characterised in that the lower part of the eccentric hook (4) comprising the rain detent (6) is made of an elastomer and that the lower side (11) is rounded.

6. Device as under Claim 5, characterised in that the jaw-like opening (8) and the upper guide edge (10) are metal-armed.

## Revendications

1. Dispositif pour le verrouillage du couvercle d'écoutille de pavillon (2) d'une cabine de véhicule automobile avec une dépression selon le sens longitudinal du véhicule et une poignée escamotable sur la face intérieure du couvercle (2), qui est fixée orientable sur le couvercle d'écoutille de pavillon (2), ladite poignée possédant la forme d'un levier dont l'extrémité articulée sur le couvercle de l'écoutille de pavillon présente un crochet excentrique (4) qui, lors de l'escamotage du levier dans la dépression du couvercle, enveloppe une came de verrouillage (15) et qui, dans une position approximativement verticale, libère la came de verrouillage (15) se signalant par le fait que le crochet excentrique (4) présente deux crans de verrouillage, à savoir un cran de fermeture (5) et un cran de pluie (6), le cran de fermeture (5) maintenant fermé le couvercle d'écoutille de pavillon (2) lors de l'encrantement par dessus la came de verrouillage (15) et le cran de pluie (6) maintenant légèrement ouvert le couvercle d'écoutille de pavillon (2) lors de l'encrantement par dessus la came de verrouillage (15).

2. Dispositif selon la revendication de brevet 1, caractérisé par le fait que le cran de pluie (6) présente une ouverture de la forme d'une mâchoire ouverte (8).

3. Dispositif selon la revendication de brevet 1 ou 2, caractérisé par le fait que le crochet à excentrique (4) présente depuis l'arête extérieure d'engagement (9) du cran de fermeture (5) une surface de glissement tombant en oblique (7) vers l'arête supérieure d'introduction (10) du cran de pluie (6) et qu'il est prévu un chanfrein d'entrée (12) sur la branche inférieure (11) du cran de pluie (6).

4. Dispositif selon les revendications 1 à 3, caractérisé par le fait que le crochet à excentrique (4) est fixé sur un axe (13) logé dans un carter (14) et déplaçable dans le sens axial contre la force d'un ressort.

5. Dispositif selon l'une ou plusieurs des revendications 1 à 4, caractérisé par le fait que la pièce inférieure du crochet à excentrique (4) comprenant le cran de pluie (6) est composée d'un élastomère et que la branche inférieure (11) est arrondie.

6. Dispositif selon la revendication 5, caractérisé par le fait que l'ouverture de la forme d'une mâchoire ouverte (8) et le chanfrein d'introduction (10) possèdent une armature métallique.
